# EUROPÄISCHE PATENTSCHRIFT

(11) **EP 2 828 003 B1**
(45) Veröffentlichungstag und Bekanntmachung des Hinweises auf die Patenterteilung: **08.04.2020**
(21) Anmeldenummer: 12761612.6
(22) Anmeldetag: 18.09.2012
(51) Int. Cl.: B05B 12/00, B05B 1/16, B05B 9/01, B05B 1/30, G01F 1/115, A01G 25/14

(54) **BEWÄSSERUNGSGERÄT MIT DURCHFLUSS-MESSEINRICHTUNG**
WATERING DEVICE HAVING A FLOW-RATE MEASURING APPARATUS
DISPOSITIF D'ARROSAGE COMPORTANT UN DÉBITMÈTRE

(30) Priorität: 21.03.2012 WO PCT/EP2012/055037
(43) Veröffentlichungstag der Anmeldung: 28.01.2015
(73) Patentinhaber: Husqvarna AB, 561 82 Huskvarna (SE)
(72) Erfinder: FREY, Reiner, 89231 Neu-Ulm (DE); MÜLLER-BRAUN, Matthias, 89233 Neu-Ulm (DE)
(74) Vertreter: Finkele, Rolf
(86) Internationale Anmeldenummer: PCT/EP2012/068333
(87) Internationale Veröffentlichungsnummer: WO 2013/139407

(56) Entgegenhaltungen:
- EP-A1- 1 655 584
- EP-A1- 1 884 292
- WO-A1-2011/055362
- DE-A1-102006 001 810
- FR-A1- 2 841 093

## Beschreibung

Die Erfindung betrifft ein Bewässerungsgerät, insbesondere ein handhaltbares Bewässerungsgerät, mit einer Durchfluss-Messeinrichtung.

Aus der EP 1 884 292 A1 ist ein handhaltbares Bewässerungsgerät in Form einer Gartenspritze bekannt, bei welcher zwischen dem Hauptkörper des Gerätegehäuses und einem mit diesem verbundenen Spritzdüsenkörper ein Strömungsweg mit einer Turbineneinheit ausgebildet ist. Die Turbineneinheit ist in einer von dem Hauptkörper und dem Spritzdüsenkörper begrenzten Turbinenaufnahme angeordnet und festgelegt. Die Turbine ist mit Permanentmagneten versehen, welche in einer außerhalb des Strömungswegs angeordneten Elektronikeinheit bei Rotation der Turbine elektrische Signale induzieren, so dass in der Elektronikeinheit die Durchflussmenge eines Wasserstroms, welcher von einem Eingangsanschluss durch die Turbine zu dem Spritzdüsenkörper fließt, ermittelt werden kann. Die Elektronikeinheit, welche eine Anzeigeeinrichtung und eine Schaltungsplatine enthält, ist in einer von einer transparenten abnehmbaren Abdeckung überdeckten Kammer in der äußeren Oberseite des Hauptkörpers des Gerätegehäuses untergebracht und kann nach Entfernen von Abdeckungen aus der Kammer entnommen werden.

Mit der FR 2 841 093 A1 wird ein Bewässerungsgerät beschrieben, bei dem in den Raum zwischen Hauptkörper und Düsenkörper ein Druchflußmengenmesser integriert ist. Es wird hierbei vorgeschlagen diese drei Komponenten reversibel lösbar voneinander auszugestalten. Hierbei ist beispielhaft an Hauptkörper und einer Seite des Druchflußmengenmessers eine Schraubverbindung ausgebildet, während auf der anderen Seite des Durchflussmengenmessers eine mit dem Düsenkörper kooperierende Schnellkupplung ausgebildet ist. Hierdurch lassen sich die Einzelkomponenten des Bewässerungsgerätes schnell und einfach entkoppeln.

Der vorlegenden Erfindung liegt die Aufgabe zugrunde, einen vorteilhaften Aufbau eines Bewässerungsgeräts mit einer Durchfluss-Messeinrichtung anzugeben.

Die Erfindung ist im unabhängigen Anspruch beschrieben. Die abhängigen Ansprüche enthalten vorteilhafte Ausgestaltungen und Weiterbildungen der Erfindung.

Die reversible Lösbarkeit des Düsenkörpers vom Hauptkörper ermöglicht vorteilhafterweise die Entnahme der Turbineneinheit aus der Turbinenaufnahme, beispielsweise um die Turbineneinheit zu reinigen oder im Falle eines Defekts zu ersetzen. In der Betriebsstellung ist die Turbineneinheit durch ein Zusammenwirken von Hauptkörper und Düsenkörper in einer definierten Position in der Turbinenaufnahme festgelegt, wobei ein Rotationskörper der Turbineneinheit um seine Rotationsachse rotierbar gelagert ist.

Düsenkörper und Hauptkörper sind typischerweise in sich mehrteilig aufgebaut, aber erfindungsgemäß in der Lösestellung jeweils als einheitlich handhabbare Körper ausgeführt. Insbesondere kann der Düsenkörper wenigstens ein Stellelement enthalten, welches in der Betriebsstellung durch den Benutzer relativ zum Hauptkörper manuell verstellbar ist und mittels dessen das Strahlbild des von einer Düsenanordnung des Düsenkörpers ausgegebenen Wasserstrahls veränderbar ist. In vorteilhafter Ausführung kann mittels des Stellelements eines von mehreren unterschiedlichen Düsenelementen als wirksames Düsenelement eines Mehrfach-Düsenkopfs ausgewählt werden.

Ein durch den Hauptkörper und durch den stromabwärts von diesem angeordneten Düsenkörper führender Strömungskanal besitze einen ersten Abschnitt im Hauptkörper und einen zweiten Abschnitt im Düsenkörper. Vorzugsweise schließen erster und zweiter Abschnitt an einem Verbindungsbereich in Strömungsrichtung unmittelbar ohne einen Zwischenkörper aneinander an und sind gegeneinander abgedichtet, wofür vorteilhafterweise eine einzige Dichtung ausreichend sein kann. Die Turbinenaufnahme ist erfindungsgemäß in einem der beiden Abschnitte des Strömungskanals ausgebildet. In anderer nichterfindungsgemäßen Ausführung kann auch an dem Verbindungsbereich ein eine Lücke zwischen erstem und zweitem Abschnitt überbrückender Zwischenkörper vorgesehen sein, welcher insbesondere auch die Turbinenaufnahme bilden kann und in der Betriebsstellung zwischen Düsenkörper und Hauptkörper festgelegt und gegen ersten und zweiten Abschnitt des Strömungskanals über je eine Dichtung abgedichtet.

Erfindungsgemäß sind Hauptkörper und Düsenkörper in der Betriebsstellung durch ein Sicherungselement zueinander verriegelt. Das Sicherungselement ist relativ zu Hauptkörper und zu Düsenkörper zwischen einer Gebrauchsstellung, in welcher das Sicherungselement Hauptkörper und Düsenkörper in deren Betriebsstellung zueinander verriegelt, und einer Nichtgebrauchsstellung, in welcher Hauptkörper und Düsenkörper zwischen der Betriebsstellung und der Lösestellung relativ zueinander gesichert sind, verlagerbar.

Das Sicherungselement ist in bevorzugter Ausführung quer zur Hauptströmungsrichtung des Strömungskanals an dem Verbindungsbereich verlagerbar, um zwischen seiner Gebrauchsstellung und Nichtgebrauchsstellung zu wechseln. Dies ist insbesondere von Vorteil in Kombination mit einem Düsenkörper, der einen Düsenkopf, beispielsweise einen Mehrfach-Düsenkopf, mit gegenüber dem Verbindungsbereich größerer Abmessung quer zur Hauptströmungsrichtung an dem Verbindungsbereich aufweist.

Das Sicherungselement bildet vorzugsweise eine formschlüssige Verriegelung von Hauptkörper und Düsenkörper. Das Sicherungselement ist bevorzugt in seiner Nichtgebrauchsstellung vollständig von Hauptkörper und Düsenkörper gelöst, kann in anderer Ausführung aber auch unverlierbar an Hauptkörper oder Düsenkörper gehalten sein. Das Sicherungselement ist in bevorzugter Ausführung als ein weiteres Gehäuse, vorzugsweise ein Kunststoff-Spritzgusskörper, ausgeführt, wobei in der Gebrauchsstellung des weiteren Gehäuseteils vorteilhafterweise wenigstens eine Gehäuseöffnung in Düsenkörper, Hauptkörper oder weiterem Gehäuseteil verdeckt ist, welche in der Nichtgebrauchsstellung zugänglich ist.

Die Verbindung zwischen Hauptkörper und Düsenkörper an dem gemeinsamen Verbindungsbereich legt einen Bewegungsablauf bei der relativen Verlagerung zwischen der Betriebsstellung und der Lösestellung fest.

In erster vorteilhafter Ausführung bildet ein solcher Bewegungsablauf eine lineare Relativbewegung zwischen Hauptkörper und Düsenkörper, vorzugsweise mit einer Bewegungsrichtung der Relativbewegung parallel zur Hauptströmungsrichtung des Strömungskanals an dem Verbindungsbereich. Die Verbindung kann dabei insbesondere eine Steckverbindung bilden. Die Bewegungsrichtung bildet die Steckrichtung. Vorteilhafterweise überlappen ineinander gesteckte Verbindungsabschnitte von Hauptkörper und Düsenkörper in Steckrichtung. Das Sicherungselement kann dann in vorteilhafter Ausführung in dem Überlappungsbereich angeordnet sein und in bevorzugter Ausführung innerhalb des Überlappungsbereichs formschlüssig in Hauptkörper und Düsenkörper eingreifen. Das Sicherungselement verriegelt dann Hauptkörper und Düsenkörper gegen eine entgegen der Steckrichtung gerichtete lösende Linearbewegung. Das Sicherungselement kann vorteilhafterweise quer zur Hauptströmungsrichtung auf Hauptkörper und/oder Düsenkörper aufsetzbar, insbesondere elastisch aufschnappbar sein. Dies kann insbesondere von Vorteil sein in Verbindung m it einem Düsenkörper, welcher sich nach dem Verbindungsbereich von Hauptkörper weg verbreitert, wie dies für Brausendüsen- oder Mehrfachdüsen-Anordnungen typisch ist. Das Sicherungselement kann auch mehrteilig aufgebaut sein, beispielsweise in Form zweier den Verbindungsbereich beidseitig umgebender Hälften.

In anderer vorteilhafter Ausführung kann die Verbindung zwischen Hauptkörper und Düsenkörper einen Bewegungsablauf mit einer Drehbewegungskomponente des Düsenkörpers relativ zum Hauptkörper enthalten und insbesondere eine Bajonettverbindung oder vorzugsweise eine Gewindeverbindung bilden, wobei die Drehachse der Drehbewegung vorteilhafterweise mit der Hauptströmungsrichtung am Verbindungsbereich zusammenfällt. Das Sicherungselement ist dann vorzugsweise so ausgebildet und mit Hauptkörper und Düsenkörper gekoppelt, dass in der Betriebsstellung von Hauptkörper und Düsenkörper das in seiner Gebrauchsstellung befindliche Sicherungselement eine Drehung des Düsenkörpers relativ zum Hauptkörper um die Drehachse sperrt.

Die mit der Turbineneinheit zur Durchflussmessung zusammen wirkende Elektronikeinrichtung ist vorteilhafterweise zumindest mit Teilen mehrerer Komponenten, vorzugsweise allen ihren Komponenten in einem lösbar mit dem Hauptkörper und/oder dem Düsenkörper verbindbaren Elektronikgehäuse untergebracht. Hierdurch kann vorteilhafterweise die Elektronikeinrichtung separat vorgefertigt und getestet werden. In einer Haltestellung, in welcher das Elektronikgehäuse mit Hauptkörper und/oder Düsenkörper verbunden ist, ist vorteilhafterweise eine Batterieaufnahme unzugänglich verdeckt, so dass ein Herausfallen einer Batterie aus der Batterieaufnahme sicher verhindert ist. In einer Freigabestellung, in welcher das Elektronikgehäuse von Hauptkörper und/oder Düsenkörper gelöst ist, ist die Batterieaufnahme zum Entnehmen bzw. Einsetzen einer Batterie für einen Benutzer zugänglich.

Das Elektronikgehäuse kann vorzugsweise eine oder mehrere, vorzugsweise alle Komponenten aus Anzeigeeinrichtung, Elektronikplatine und Bedienelement enthalten.

In besonders vorteilhafter Ausführung bildet das Elektronikgehäuse zugleich das Sicherungselement, welches in seiner Gebrauchsstellung Hauptkörper und Düsenkörper relativ zueinander verriegelt.

Die Erfindung ist nachfolgend anhand bevorzugter Ausführungsbeispiele unter Bezugnahme auf die Abbildungen noch eingehend veranschaulicht. Dabei zeigt:
- Fig. 1: eine erste Ausführungsform einer Gartenspritze als Bewässerungsgerät,
- Fig. 2: eine weitere Ausführung einer Gartenspritze,
- Fig. 3: die Gartenspritze nach Fig. 2 im Gebrauchszustand.

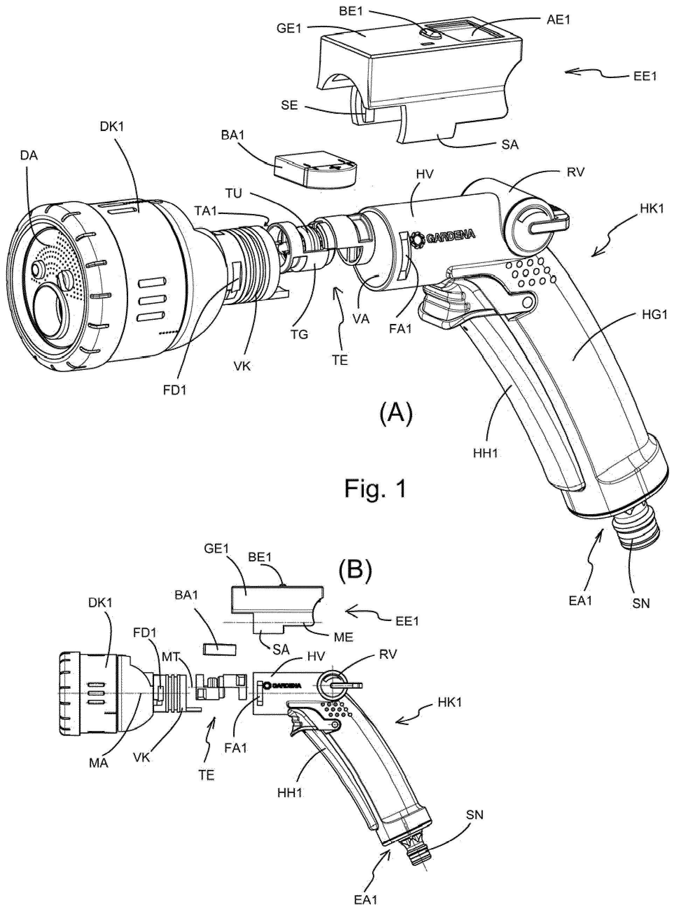

Fig. 1 zeigt in einer perspektivischen Darstellung nach Fig. 1 (A) und einer Seitenansicht nach Fig. 1 (B) eine erste Ausführung einer Gartenspritze als Bewässerungsgerät, bei welcher ein Düsenkopf DK1 mit einer Düsenanordnung DA zur Abgabe von Wasserstrahlen nach mehreren verschiedenen wählbaren Strahlbildern ausgebildet ist. Die Ausbildung des Düsenkopfes als Multifunktions-Düsenkopf ist lediglich beispielhaft. Ein Hauptkörper HK1 der Gartenspritze besitzt einen Eingangsanschluss EA1 mit einem Stecknippel SN als Teil einer Schlauchkupplung. Der Hauptkörper HK1 des Gehäuses der Gartenspritze besitzt einen Griffabschnitt HG1, welcher zum Umgreifen durch eine Benutzerhand ausgebildet und vorgesehen ist, sowie einen dem Düsenkopf DK1 zugewandten Verbindungsabschnitt HV, in welchen ein Verbindungsstutzen VK des Düsenkopfs DK1 einsteckbar ist. An dem Verbindungsstutzen VK sind umlaufende Nuten zur Aufnahme von O-Ring-Dichtungen vorgesehen, welche im zusammen gefügten Zustand von Düsenkopf DK1 und Hauptkörper HK1 an der Innenwand einer Verbindungsaufnahme VA in dem Verbindungsstutzen HV anliegen und eine zuverlässige seitliche Abdichtung des Strömungswegs durch das Gehäuse der Gartenspritze von dem Eingangsanschluss EA1 zu der Düsenanordnung DA des Düsenkopfes DK1 gewährleisten.

Eine Turbineneinheit TE, welche eine Turbine TU in einem Turbinengehäuse TG enthält, ist in Richtung des Zusammenfügens des Verbindungsstutzens VK mit dem Verbindungsabschnitt HV zwischen Düsenkopf DK1 und Hauptkörper HK1 einsetzbar und ist im zusammen gefügten Zustand von Düsenkopf DK1 und Hauptkörper HK1 in einer durch diese beiden Gehäuseteile gebildeten Turbinenaufnahme gehalten und füllt im wesentlichen den gesamten Querschnitt der Turbinenaufnahme auf, so dass ein vom Eingangsanschluss EA1 des Hauptkörpers HK1 zu der Düsenanordnung DA fließender Wasserstrom im wesentlichen vollständig durch die Turbineneinheit TE fließt und die Turbine TU rotierend antreibt. An den Verbindungsstutzen VK ist schematisch mit TA1 ein in den Düsenkopf ausgebildeter Teil der Turbinenaufnahme angedeutet.

Die Turbine TU enthält vorteilhafterweise in an sich bekannter Art Permanentmagnete, welche bei Rotation der Turbine TU ein die Seitenwand der Turbinenaufnahme durchdringendes, durch die Rotation wechselndes Magnetfeld bewirken. Dieses Magnetfeld wird durch eine Elektronikeinheit EE1 an der Außenseite des Verbindungsabschnitts HV detektiert, beispielsweise durch eine Spule und/oder einen Reed-Sensor oder Hall-Sensor, und in einer Auswerteeinrichtung der Elektronikeinrichtung EE ausgewertet. Die Auswertung kann insbesondere die Erfassung einer kumulierten Durchflussmenge beinhalten. Eine Anzeigeeinrichtung AE1 der Elektronikeinheit EE1 kann dann beispielsweise die ab einem Startzeitpunkt über die Düsenanordnung DA abgegebene Wassermenge anzeigen.

Die Elektronikeinheit EE1 besitzt ein eigenes Gehäuse GE1, in welchem eine Elektronikschaltung und die Anzeigeeinrichtung AE1 untergebracht sein können und vorzugsweise feuchtigkeitsgeschützt in einer isolierenden Vergussmasse vergossen sind. Ein Magnetfeldsensor innerhalb des Elektronikgehäuses GE1 kann in die Vergussmasse mit einbezogen oder außerhalb dieser angeordnet sein. Für eine vorteilhaft geringere Distanz zu den Magneten der Turbine TU ist ein Magnetfeldsensor an einer dem Verbindungsabschnitt HV zugewandten Seite des Elektronikgehäuses GE1 angeordnet. An dem Elektronikgehäuse EE1 ist eine in Fig. 1 nicht erkennbare, in der Ansicht nach Fig. 1 verdeckt liegende Batterieaufnahme vorgesehen, in welche eine Batterie BA1, welche auch eine wieder aufladbare Batterie sein kann, einsetzbar ist.

Das Elektronikgehäuse GE1 der Elektronikeinheit EE1 ist relativ zu dem Gerätegehäuse der Gartenspritze zwischen einer Betriebsstellung, in welcher die Elektronikeinheit EE das magnetische Feld der Permanentmagnete der Turbine TU erfassen kann, und einer Nichtgebrauchsstellung verlagerbar. Im skizzierten Beispiel ist die Elektronikeinheit EE1 vollständig von dem Gerätegehäuse lösbar und in Fig. 1 in der Nichtgebrauchsstellung gezeichnet. Das Elektronikgehäuse GE1 der Elektronikeinheit EE1 ist quer zum Strömungsweg durch die Turbineneinheit TE auf das Gerätegehäuse aufsetzbar, im skizzierten Beispiel aufschnappbar, wobei elastisch verformbare Schnappstrukturen SA1 des Elektronikgehäuses GE1 unter der Einwirkung einer das Elektronikgehäuse GE1 quer zur Strömungsrichtung durch die Turbineneinheit wirkenden Benutzerkraft an der Außenseite des Verbindungsabschnitts HV entlang gleiten und sich dabei entgegen einer elastischen Rückstellkraft aufspreizen und in vollständig aufgeschnapptem Zustand mit ihren freien Enden den Verbindungsabschnitt HV hintergreifen.

In Fig. 1 (B) ist für den Verbindungsstutzen VK und den Verbindungsabschnitt HV eine gemeinsame Mittellängsachse MA eingezeichnet. Für das Elektronikgehäuse GE1 ist eine Mittellängsachse ME zwischen den Schnappstrukturen SA1 eingetragen, welche im der Gebrauchsstellung mit auf das Gerätegehäuse aufgeschnappten Elektronikgehäuse mit der Mittellängsachse MA zusammenfällt. Die Turbineneinheit ist mit ihrer Turbinen-Rotationsachse MT gegen die Mittellängsachse MA in Richtung des Elektronikgehäuses GE1 versetzt angeordnet, um die Distanz zwischen den Permanentmagneten der Turbine und den Magnetfeldsensor der Elektronikeinheit gering zu halten.

In dem Verbindungsabschnitt HV sind Wanddurchbrüche FA1 ausgebildet. An dem Verbindungsstutzen VK des Düsenkopfs DK1 sind Abflachungen FD1 als Vertiefungen gegen eine zylindrische Einhüllende des Verbindungsstutzens VK ausgebildet, welche bei vollständig in den Verbindungsabschnitt HV eintauchendem Verbindungsstutzen VK durch die Wanddurchbrüche FA1 zugänglich sind. An den den Verbindungsabschnitt HV im aufgeschnappten Zustand des Elektronikgehäuses GE1 umgreifenden Schnappstrukturen SA1 sind an den dem Verbindungsabschnitt HV zuweisenden Innenseiten Sicherungselemente SE ausgebildet, welche durch die Wanddurchbrüche FA1 in die abgeflachten Vertiefungen FD1 des Verbindungsstutzens VK des Düsenkörpers DK1 eingreifen und auf diese Weise den Verbindungsstutzen VK innerhalb des Verbindungsabschnitts HV des Hauptkörpers HK1 formschlüssig gegen Ausziehen und eventuell auch gegen Verdrehen sichern. Vorzugsweise sind zusätzlich von den Vertiefungen FD1 unabhängige Verdrehsicherungen zwischen Düsenkopf DK1 und Hauptkörper HK1 vorgesehen.

Bei vollständiger Zusammensetzung aller in Fig. 1 dargestellten Komponenten der Gartenspritze ist die Turbineneinheit TE innerhalb der durch Düsenkopf DK1 und Hauptkörper HK1 des Gerätegehäuses begrenzten Turbinenaufnahme gehalten und festgelegt und die in die Batterieaufnahme des Elektronikgehäuses GE1 eingesetzte Batterie ist unzugänglich verdeckt und dadurch die Batterie BA1 auch sicher in der Batterieaufnahme gehalten. Zum Wechseln der Batterie BA1 und/oder zur Entnahme der Turbineneinheit TE aus der Turbinenaufnahme wird das Elektronikgehäuse GE1 quer zur Strömungsrichtung durch die Turbineneinheit TE von dem Verbindungsabschnitt HV des Hauptkörpers HK1 abgezogen, wonach die Batterie BA1 aus der Batterieaufnahme des Elektronikgehäuses GE1 und/oder nach Abziehen des Düsenkopfes DK1 von dem Verbindungsabschnitt HV die Turbineneinheit TE zur Reinigungszwecken oder zum Austausch entnommen werden kann.

An dem Hauptkörper HK1 sind noch in an sich bekannter Weise ein zur Freigabe des Strömungswegs durch den Hauptkörper HK1 von einer Benutzerhand betätigbarer Handhebel HA1 an einem Handgriffabschnitt HG1 sowie ein handbetätigbares Regulierventil RV dargestellt.

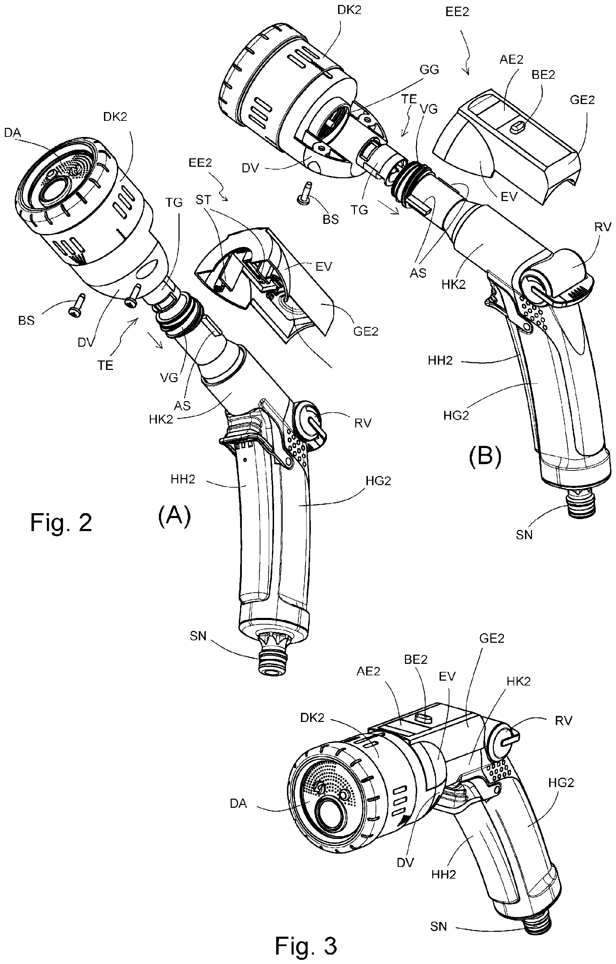

Fig. 2 zeigt eine weitere vorteilhafte Ausführung einer Gartenspritze als Explosionsdarstellung in zwei Ansichten (A) und (B) mit unterschiedlichen Blickrichtungen.

Die in Fig. 2 dargestellte Gartenspritze umfasst analog zu Ausführung nach Fig. 1 wiederum insbesondere einen Hauptkörper HK2 mit einem Handgriff HG2, einen Düsenkörper DK2 und eine Elektronikeinrichtung EE2 in einem Elektronikgehäuse GE2. In einem dem Düsenkopf DK2 zu weisenden Abschnitt des Hauptkörpers HK2 sei eine Öffnung TA als Aufnahme für eine Turbineneinheit TE ausgebildet. Die Turbineneinheit TE enthält in einem Turbinengehäuse TG einen Rotationskörper, dessen Rotationsachse vorzugsweise parallel zur Hauptströmungsrichtung eines Strömungskanalabschnitts bei der Turbinenaufnahme TA verläuft.

An seinem dem Düsenkörper DK2 zu weisenden Ende besitzt der Hauptkörper HK2 ein Gewinde VG. In dem Düsenkörper DK2 ist dem Hauptkörper HK2 zugewandt ein Gegengewinde GG ausgebildet. Der Düsenkörper DK2 ist über die Gewindeverbindung von Gewinde VG und Gegengewinde GG auf den Hauptkörper HK2 aufschraubbar, wobei das Gewinde in diesem Fall nicht selbsthemmend ausgeführt zu sein braucht und eine hohe Gewindesteilheit besitzen kann. Die Gewindeachse der Gewindeverbindung bestimmt eine Verbindungsrichtung VR. Der Bewegungsablauf bei der Verbindung des Düsenkörpers DK2 mit dem Hauptkörper HK2 bzw. der gegensinnige Bewegungsablauf beim Lösen des Düsenkörpers DK2 vom Hauptkörper HK2 setzt sich dann aus einer linearen Komponente in Verbindungsrichtung VR und aus einer Drehkomponente um die Verbindungsrichtung VR zusammen.

An dem Düsenkörper DK2 ist dem Hauptkörper HK2 zu weisend ein Verbindungsabschnitt DV ausgebildet, welcher bei auf den Hauptkörper HK2 in der Betriebsstellung aufgeschraubtem Düsenkörper DK2 mit einem diesem zu weisenden Verbindungsabschnitt des Hauptkörpers HK2 in Verbindungsrichtung VR überlappt. Das Elektronikgehäuse GE2, welches die Elektronikeinrichtung EE2, insbesondere eine Anzeigeeinrichtung AE2, ein Bedienelement BE2 und eine Elektronikplatine sowie einen Sensor für das berührungslose Zusammenwirken mit der Turbineneinheit TE enthält, weist einen Gehäuseabschnitt EV auf, über welchen das Elektronikgehäuse GE2 mittels Befestigungsschrauben BS oder anderer Befestigungsmittel mit dem in der Betriebsstellung auf dem Hauptkörper HK2 aufgebrachten Düsenkörper DK2 verbunden werden kann, wie in dem zusammen gebauten Betriebszustand in Fig. 3 ersichtlich ist.

An einem dem Düsenkörper DK2 zu weisenden Verbindungsabschnitt des Hauptkörpers HK2 sind über in Umfangsrichtung benachbarte Gehäuseflächen des Hauptkörpers HK2 radial bezüglich der Verbindungsrichtung VR abstehende Anschlagstrukturen AS ausgebildet. Eine Aussparung im Verbindungsabschnitt DV des Düsenkörpers DK2 ist radial so groß gewählt, dass beim Aufschrauben des Düsenkörpers DK2 auf den Hauptkörper HK2 über die Gewindeverbindung VG, GG der Verbindungsabschnitt DV an den Anschlagstrukturen AS vorbei gedreht werden kann. In dem Elektronikgehäuse GE2 sind Gegenanschlagstrukturen ST ausgebildet, welche bei im Betriebszustand an dem Düsenkörper DK2 befestigten Elektronikgehäuse GE2 an den Anschlagstrukturen AS des Hauptkörpers HK2 anliegen und hierdurch ein Verdrehen des Düsenkörpers DK2 gegen den Hauptkörper HK2 um die Verbindungsrichtung VR sperren. In der Betriebsstellung ist somit eine Drehbewegung des Düsenkörpers DK2 um die Verbindungsrichtung VR blockiert und somit ein versehentliches Lösen der Gewindeverbindung VG, GG zuverlässig verhindert. Das Elektronikgehäuse GE2 bildet dadurch ein Sicherungselement, welches ein Lösen der Verbindung zwischen Düsenkörper DK2 und Hauptkörper HK2 unterbindet.

In dem Elektronikgehäuse GE2 ist ferner eine Batterieaufnahme BA2 ausgebildet, welche in der in Fig. 2 dargestellten Nichtgebrauchsstellung des Elektronikgehäuses GE2, in welcher dieses von Düsenkörper DK2 und Hauptkörper HK2 gelöst ist, für den Benutzer zum Auswechseln einer für den Betrieb der Elektronikeinrichtung EE2 benötigten Batterie zugänglich ist. In dem in Fig. 3 dargestellten Betriebszustand der Gartenspritze mit in Betriebsstellung befindlichem Hauptkörper HK2 und Düsenkörper DK2 sowie diese Betriebsstellung sicherndem Elektronikgehäuse GE2 als Sicherungselement in dessen Gebrauchsstellung ist die Batterieaufnahme BA2 zwischen Elektronikgehäuse GE2 und Hauptkörper HK2 verdeckt, so dass ein unbeabsichtigtes Ausfallen der Batterie aus der Batterieaufnahme zuverlässig verhindert ist.

Eine Abdichtung zwischen einem ersten Strömungskanalabschnitt im Hauptkörper HK2 und einem sich in Strömungsrichtung stromabwärts anschließenden zweiten Strömungskanalabschnitt im Düsenkörper DK2 erfolgt im Verbindungsbereich zwischen Hauptkörper HK2 und Düsenkörper DK2 beispielsweise durch eine in Verbindungsrichtung zwischen Hauptkörper HK2 und Düsenkörper DK2 eingefügte Ringdichtung. An dem Hauptkörper HK2 sind in zu Fig. 1 analoger Weise wiederum ein Betätigungselement HH2 zur Freigabe des Strömungskanals durch den Hauptkörper, ein Regulierventil RV und ein Schlauchnippel SN als Anschlusselement ausgebildet. In übereinstimmenden Elementen zwischen der Ausführung nach Fig. 1 und Fig. 2 gelten die zu Fig. 1 gemachten Ausführungen analog.

Die Ausbildung der Anschlagstrukturen AS kann auf vielfältige Weise variieren. Ebenso die Ausbildung der Gegenanschlagstrukturen ST im Elektronikgehäuse GE2. Von Bedeutung bei der Art der Verbindung ist, dass die Verbindung eine Drehbewegungskomponente beim Bewegungsablauf des Herstellens oder des Lösens der Verbindung zwischen Düsenkörper DK2 und Hauptkörper HK2 aufweist und ein Sicherungselement, welches vorzugsweise durch das Elektronikgehäuse GE2 gebildet ist, die Betriebsstellung zwischen Düsenkörper DK2 und Hauptkörper HK2 sichert, indem ein solches Sicherungselement die Drehbewegung der Verbindung, welche in alternativer Ausführung auch eine Bajonettverbindung sein könnte, sperrt. Ein Eingriff von Gegenanschlagstrukturen mit Anschlagstrukturen kann auch auf andere an sich dem Fachmann geläufige Art ausgeführt sein und auch eine zur Verbindungsrichtung parallele Schiebebewegung umfassen.

## Patentansprüche

1. Bewässerungsgerät mit einem
- Hauptkörper (HK1, HK2),
- einem Düsenkörper (DK1, DK2),
- und einer Durchfluss-Messeinrichtung mit einer Turbineneinheit (TE), welche in einer Turbinenaufnahme (TA) eines durch den Hauptkörper (HK1, HK2) und den Düsenkörper (DK1, DK2) führenden Strömungskanals angeordnet ist, sowie mit einer berührungslos mit der Turbineneinheit (TE) zusammen wirkenden, außerhalb des Strömungskanals angeordneten Elektronikeinheit (EE1, EE2),
wobei Hauptkörper (HK1, HK2) und Düsenkörper (DK1, DK2)
- in einer Betriebsstellung miteinander verbunden sind, wobei der Strömungskanal einen ersten Abschnitt im Hauptkörper (HK1, HK2) und einen zweiten Abschnitt im Düsenkörper (DK1, DK2) besitzt,
- und in einer Lösestellung jeweils als einheitlich handhabbare Körper ausgeführt sind,
hierbei sind Hauptkörper (HK1, HK2) und Düsenkörper (DK1, DK2) reversibel aus der Betriebsstellung über eine Relativbewegung zueinander voneinander lösbar in die Lösestellung bringbar und umgekehrt,
und wobei ein Sicherungselement relativ zu Hauptkörper (HK1,HK2) und Düsenkörper (DK1, DK2)
- zwischen einer Gebrauchsstellung, in der Hauptkörper (HK1, HK2) und Düsenkörper (DK1, DK2) gegen ein Lösen aus der Betriebsstellung verriegelt sind, und
- einer Nichtgebrauchsstellung, in der sich Hauptkörper (HK1, HK2) und Düsenkörper (DK1, DK2) zur Lösung voneinander freigegeben sind, verlagerbar ist,
**dadurch gekennzeichnet,**
**dass** die Turbinenaufnahme (TA) in dem im Hauptkörper (HK1, HK2) befindlichen ersten Abschnitt oder in dem im Düsenkörper (DK1, DK2) befindlichen zweiten Abschnitt des Strömungskanals ausgebildet ist,
und **dass** die Turbineneinheit (TE) in der Lösestellung des Hauptkörpers (HK1, HK2) und Düsenkörpers (DK1, DK2) in die Turbinenaufnahme (TA) einsetzbar bzw. aus dieser entnehmbar ist,

2. Bewässerungsgerät nach Anspruch 1, **dadurch gekennzeichnet, dass** ein erster Abschnitt des Strömungskanals im Hauptkörper (HK1, HK2) und ein zweiter Abschnitt des Strömungskanals im Düsenkörper (DK1, DK2) in Strömungsrichtung in der Betriebsstellung in einem Verbindungsbereich unmittelbar gegeneinander abgedichtet sind.

3. Bewässerungsgerät nach Anspruch 1 oder 2, **dadurch gekennzeichnet, dass** in der Betriebsstellung wenigstens einer der beiden Abschnitte des Strömungskanals die Turbineneinheit (TE) umgibt.

4. Bewässerungsgerät nach einem der Ansprüche 1 bis 3, **dadurch gekennzeichnet, dass** der Düsenkörper (DK1, DK2) wenigstens ein in der Betriebsstellung relativ zum Hauptkörper manuell verstellbares Stellelement enthält, mittels dessen ein Strahlbild einer Düsenanordnung (DA) des Düsenkörpers veränderbar ist.

5. Bewässerungsgerät nach einem der vorhergehenden Ansprüche, **dadurch gekennzeichnet, dass** das Sicherungselement vollständig von Hauptkörper (HK1, HK2) und Düsenkörper (DK1, DK2) gelöst ist.

6. Bewässerungsgerät nach einem der vorhergehenden Ansprüche, **dadurch gekennzeichnet, dass** das Sicherungselement quer zur Längsrichtung des Strömungskanals relativ zu Hauptkörper (HK1, HK2) und Düsenkörper (DK1, DK2) in die Gebrauchsstellung bzw. aus dieser verlagerbar ist.

7. Bewässerungsgerät nach einem der vorhergehenden Ansprüche, **dadurch gekennzeichnet, dass** ein Elektronikgehäuse (GE1, GE2), welches zumindest einen Teil der Elektronikeinrichtung (EE1, EE2) enthält, relativ zu Hauptkörper (HK1, HK2) und/oder Düsenkörper (DK1, DK2) zwischen einer Haltestellung, in welcher das Elektronikgehäuse (GE1, GE2) mit Hauptkörper (HK1, HK2) und/oder Düsenkörper (DK1, DK2) verbunden ist und einer Freigabestellung, in welcher das Elektronikgehäuse (GE1, GE2) von Hauptkörper (HK1, HK2) und/oder Düsenkörper (DK1, DK2) gelöst ist, verlagerbar ist.

8. Bewässerungsgerät nach Anspruch 7, **dadurch gekennzeichnet, dass** das Elektronikgehäuse (GE1, GE2) eine Anzeigeeinrichtung (AE1, AE2) und/oder ein Bedienelement (BE1, BE2) der Elektronikeinrichtung (EE1 EE2) enthält.

9. Bewässerungsgerät nach Anspruch 7 oder 8, **dadurch gekennzeichnet, dass** das Elektronikgehäuse in der Haltestellung eine Batterieaufnahme (BA1, BA2) unzugänglich verbirgt, welche in der Freigabestellung zugänglich ist.

10. Bewässerungsgerät nach einem der vorhergehenden Ansprüche, **dadurch gekennzeichnet, dass** das Sicherungselement bzw. das Elektronikgehäuse (GE1) auf den Hauptkörper (HK1) und/oder auf den Düsenkörper (DK1) aufschnappbar ist.

11. Bewässerungsgerät nach einem der vorhergehenden Ansprüche, **dadurch gekennzeichnet, dass** das Sicherungselement bzw. das Elektronikgehäuse (GE2) durch wenigstens ein lösbares Befestigungselement (BS) an dem Hauptkörper (HK2) und/oder dem Düsenkörper (DK2) befestigbar ist.

12. Bewässerungsgerät nach einem der vorhergehenden Ansprüche, **dadurch gekennzeichnet, dass** das Elektronikgehäuse (GE1, GE2) das Sicherungselement bildet.

## Claims

1. Watering device comprising
- a main body (HK1, HK2),
- a nozzle body (DK1, DK2),
- and a flow measuring device with a turbine unit (TE), which is arranged in a turbine receptacle (TA) of a flow channel leading through the main body (HK1, HK2) and the nozzle body (DK1, DK2), as well as with an electronic unit (EE1, EE2) arranged outside the flow channel which interacts contactless with the turbine unit (TE),
wherein main body (HK1, HK2) and nozzle body (DK1, DK2)
- are connected to each other in an operating position, wherein the flow channel has a first portion in the main body (HK1, HK2) and a second portion in the nozzle body (DK1, DK2),
- and are each implemented as uniformly manageable bodies in a release position, wherein main body (HK1, HK2) and nozzle body (DK1, DK2) can be reversibly brought from the operating position into the release position via a relative movement to each other and vice versa,
and wherein a securing element is displaceable relative to main body (HK1, HK2) and nozzle body (DK1, DK2),
- between a use position in which the main body (HK1, HK2) and the nozzle bodies (DK1, DK2) are secured against release from the operating position, and
- a position of non-use in which main body (HK1, HK2) and nozzle body (DK1, DK2) are free to release each other,
**characterized in that**
the turbine receptacle (TA) is formed in the first section of the flow channel located in the main body (HK1, HK2) or in the second section of the flow channel located in the nozzle body (DK1, DK2),
and that the turbine unit (TE) can be inserted into or removed from the turbine receptacle (TA) in the release position of the main body (HK1, HK2) and the nozzle body (DK1, DK2),

2. Watering device according to claim 1, **characterized in that** a first portion of the flow channel in the main body (HK1, HK2) and a second portion of the flow channel in the nozzle body (DK1, DK2) are directly sealed from each other in the direction of flow in the operating position in a connecting area.

3. Watering device according to claim 1 or 2, **characterized in that** in the operating position at least one of the two sections of the flow channel surrounds the turbine unit (TE).

4. Watering device according to any one of claims 1 to 3, **characterized in that** the nozzle body (DK1, DK2) comprises at least one adjusting element which is manually adjustable in the operating position relative to the main body, by means of which a jet pattern of a nozzle arrangement (DA) of the nozzle body is changeable.

5. Watering device according to any one of the preceding claims, **characterized in that** the securing element is completely detached from the main body (HK1, HK2) and nozzle body (DK1, DK2).

6. Watering device according to any one of the preceding claims, **characterized in that** the securing element is displaceable transversely to the longitudinal direction of the flow channel relative to the main body (HK1, HK2) and the nozzle body (DK1, DK2) into and out of the position of use.

7. Watering device according to any one of the preceding claims, **characterized in that** an electronics housing (GE1, GE2) comprising at least parts of the electronics device (EE1, EE2) is displaceable relative to the main body (HK1, HK2) and/or the nozzle body (DK1, DK2) between a holding position, in which the electronics housing (GE1, GE2) is connected to the main body (HK1, HK2) and/or nozzle body (DK1, DK2), and a release position in which the electronics housing (GE1, GE2) is released from the main body (HK1, HK2) and/or nozzle body (DK1, DK2).

8. Watering device according to claim 7, **characterized in that** the electronics housing (GE1, GE2) comprises a display device (AE1, AE2) and/or an operating element (BE1, BE2) of the electronics device (EE1 EE2).

9. Watering device according to claim 7 or 8, **characterized in that** the electronics housing in the holding position inaccessibly hides a battery receptacle (BA1, BA2), which is accessible in the release position.

10. Watering device according to any one of the preceding claims, **characterized in that** the securing element respectively the electronics housing (GE1) can be snapped onto the main body (HK1) and/or onto the nozzle body (DK1).

11. Watering device according to any one of the preceding claims, **characterized in that** the securing element respectively the electronics housing (GE2) can be attached to the main body (HK2) and/or the nozzle body (DK2) by means of at least one detachable fastening element (BS).

12. Watering device according to any one of the preceding claims, **characterized in that** the electronics housing (GE1, GE2) forms the securing element.

## Revendications

1. Dispositif d'arrosage comportant un
- corps principal (HK1, HK2),
- un corps de buse (DK1, DK2),
- et un débitmètre équipé d'un groupe turbine (TE), lequel est agencé dans un logement de turbine (TA) d'un canal d'écoulement traversant le corps principal (HK1, HK2) et le corps de buse (DK1, DK2), ainsi que d'une unité électronique (EE1, EE2) agencée à l'extérieur du canal d'écoulement, coopérant sans contact avec le groupe turbine (TE),
**caractérisé en ce que** le corps principal (HK1, HK2) et le corps de buse (DK1, DK2)
- sont interconnectés dans une position de fonctionnement, le canal d'écoulement possédant une première section dans le corps principal (HK1, HK2) et une deuxième section dans le corps de buse (DK1, DK2),
- et, dans une position de détachement, se présentent respectivement sous la forme de corps uniformément maniables,
- le corps principal (HK1, HK2) et le corps de buse (DK1, DK2) pouvant dans ce cas être détachés l'un de l'autre de façon réversible à partir de la position de fonctionnement par un mouvement relatif l'un par rapport à l'autre et ramenés en position de détachement et inversement,
- et **caractérisé en ce qu'**un élément de blocage est déplaçable par rapport au corps principal (HK1, HK2) et au corps de buse (DK1, DK2) entre une position d'utilisation dans laquelle le corps principal (HK1, HK2) et le corps de buse (DK1, DK2) sont verrouillés contre un détachement à partir de la position de fonctionnement, et une position de non-utilisation dans laquelle le corps principal (HK1, HK2) et le corps de buse (DK1, DK2) sont libérés l'un de l'autre à des fins de détachement,
**caractérisé en ce que**,
- le logement de turbine (TA) est formé dans la première section située dans le corps principal (HK1, HK2) ou dans la deuxième section du canal d'écoulement située dans le corps de buse (DK1, DK2), et **en ce que** le groupe turbine (TE) peut être monté dans le logement de turbine (TA) ou en être retiré en position de détachement du corps principal (HK1, HK2) et du corps de buse (DK1, DK2).

2. Dispositif d'arrosage selon la revendication 1, **caractérisé en ce qu'**une première section du canal d'écoulement dans le corps principal (HK1, HK2) et une deuxième section du canal d'écoulement dans le corps de buse (DK1, DK2) sont directement étanches l'une par rapport à l'autre dans le sens d'écoulement en position de fonctionnement dans une zone de jonction.

3. Dispositif d'arrosage selon la revendication 1 ou 2, **caractérisé en ce qu'**en position de fonctionnement, au moins l'une des deux sections du canal d'écoulement entoure le groupe turbine (TE).

4. Dispositif d'arrosage selon l'une des revendications 1 à 3, **caractérisé en ce que** le corps de buse (DK1, DK2) comprend au moins un élément de réglage ajustable manuellement par rapport au corps principal en position de fonctionnement, grâce auquel il est possible de modifier la forme du jet d'un agencement de buses (DA).

5. Dispositif d'arrosage selon l'une des revendications précédentes, **caractérisé en ce que** l'élément de blocage se détache entièrement du corps principal (HK1, HK2) et du corps de buse (DK1, DK2).

6. Dispositif d'arrosage selon l'une des revendications précédentes, **caractérisé en ce que** l'élément de blocage est déplaçable transversalement au sens longitudinal du canal d'écoulement par rapport au corps principal (HK1, HK2) et au corps de buse (DK1, DK2) en position d'utilisation ou hors de cette position.

7. Dispositif d'arrosage selon l'une des revendications précédentes, **caractérisé en ce qu'**un boîtier électronique (GE1, GE2) qui comprend au moins une partie de l'équipement électronique (EE1, EE2), est déplaçable par rapport au corps principal (HK1, HK2) et/ou au corps de buse (DK1, DK2) entre une position de retenue dans laquelle le boîtier électronique (GE1, GE2) est relié au corps principal (HK1, HK2) et/ou au corps de buse (DK1, DK2), et une position de libération dans laquelle le boîtier électronique (HK1, HK2) est détaché du corps principal (HK1, HK2) et/ou du corps de buse (DK1, DK2).

8. Dispositif d'arrosage selon la revendication 7, **caractérisé en ce que** le boîtier électronique (GE1, GE2) comporte un dispositif d'affichage (AE1, AE2) et/ou un élément de commande (BE1, BE2) de l'équipement électronique (EE1, EE2).

9. Dispositif d'affichage selon la revendication 7 ou 8, **caractérisé en ce que** le boîtier électronique en position de retenue dissimule de manière inaccessible un logement de batterie (BA1, BA2), lequel est rendu accessible en position de libération.

10. Dispositif d'arrosage selon l'une des revendications précédentes, **caractérisé en ce que** l'élément de blocage ou le boîtier électronique (GE1) puisse s'encliqueter sur le corps principal (HK1) et/ou sur le corps de buse (DK1).

11. Dispositif d'arrosage selon l'une des revendications précédentes, **caractérisé en ce que** l'élément de blocage ou le boîtier électronique (GE2) puisse être fixé par l'intermédiaire d'au moins un élément de fixation (BS) amovible sur le corps principal (HK2) et/ou sur le corps de buse (DK2).

12. Dispositif d'arrosage selon l'une des revendications précédentes, **caractérisé en ce que** le boîtier électronique (GE1, GE2) forme l'élément de blocage.
